# DEMANDE DE BREVET EUROPEEN

(11) **EP 1 233 382 A1**
(43) Date de publication de la demande: **21.08.2002**
(21) Numéro de dépôt: 01810177.4
(22) Date de dépôt: 20.02.2001
(51) Int. Cl.: G07F 7/10, G06F 9/44

(54) **Elément électronique**

(71) Demandeur: Ellypsis Concept S.A., 1206 Genève (CH)
(72) Inventeur:
(74) Mandataire: Kiliaridis, Constantin

(57) **Abrégé**

L'élément électronique comprend un jeu de mémoires volatiles et non volatiles, une interface de communication sans contact(Matériel/Microprocesseur) et un système d'exploitation (OS). Sur la partie matérielle est bâtie une abstraction logicielle du matériel (HAL), sur laquelle est bâtie la machine virtuelle (VM). Le système d'exploitation (OS) a comme fonction unique la mise en commun du code exécutable et les applications 1 à n.

## Description

La présente invention concerne un élément électronique comprenant au moins un jeu de mémoires volatiles et non volatiles, une interface de communication sans contact et un système d'exploitation.

Dans cette dernière décennie, on a vu l'explosion de l'informatique et des communications ce qui a apporté d'énormes avantages mais également des problèmes concernant l'identification d'un demandeur d'une transaction. Ainsi, on a amélioré des éléments tels que des cartes à puce à contact ou sans contact pour pouvoir les utiliser dans certaines transactions telles que paiement de certaines prestations sans argent liquide ou obtention d'argent liquide à travers une carte à puce ou similaire, pouvoir utiliser des téléphones du type GSM ou similaire, entrer en contact avec une machine se trouvant à distance pour obtenir des renseignements confidentiels, entrer dans des locaux sécurisés, etc. Actuellement, les cartes à puce ne donnent pas satisfaction car on peut assez facilement les copier, voire les violer pour obtenir soit des renseignements désirés, soit d'en prendre le contrôle et de les utiliser à mauvais escient. On peut distinguer les différentes cartes utilisées pour de telles applications selon les trois catégories principales suivantes : cartes à piste magnétique; cartes à puce à contact et carte à puce sans contact.

La force des cartes à bande magnétique est leur faible coût de revient, néanmoins elles ne présentent aucune sécurité, ont une mémoire faible et ne peuvent pas supporter plusieurs applications. Les cartes à puce à contact sont subdivisées en deux catégories avec un système d'exploitation ou sans système d'exploitation. Les puces sans système d'exploitation ont un coût de fabrication faible mais il est difficile d'obtenir une cryptographie efficace, ont souvent peu de mémoire, l'utilisation pour multi-applications est possible mais présente beaucoup de faiblesses par manque de souplesse et de sécurité, les contacts rendent plus aisées les attaques directes. Les puces à contact avec système d'exploitation présentent l'avantage d'une cryptographie plus efficace, plus de mémoire, donnent la possibilité de les utiliser en multi-applications, néanmoins elles sont beaucoup plus chères. Du fait que la communication se fait par contact elles présentent certaines vulnérabilités aux attaques extérieures et sont contraintes par un format physique. Leur avantage est que l'on n'a pas l'inconvénient de l'alimentation en énergie puisqu'elle est fournie lors du contact.

Enfin, pour les puces sans contact, on distingue également les puces avec système d'exploitation et sans système d'exploitation. Les puces sans contact sans système d'exploitation sont d'un coût relativement faible, le fait que la communication ne se fait pas par contact diminue le danger des attaques extérieures et la communication sans contact autorise de nouvelles applications et permet également d'allonger la durée de vie des éléments puisqu'il n'y a pas d'usure. Malheureusement, pour les puces sans contact sans système d'exploitation, la possibilité de cryptographie reste insuffisante comme celui des puces à contact, il y a généralement peu de mémoire et une multi-applications est possible, mais elles présentent des faiblesses fonctionnelles, un manque de sécurité et de souplesse.

Enfin les puces sans contact avec système d'exploitation présentent pratiquement que des avantages, à savoir, elles sont d'un coût de revient relativement faible par rapport à ses possibilités, on peut obtenir une cryptographie efficace, on a une mémoire suffisante à disposition, les applications multiples sont possibles, le fait que la communication ne se fait pas par contact direct évite un certain nombre d'attaques directes et la communication sans contact permet de nouvelles applications tout en allongeant la vie de l'élément. Comme pour toutes les puces, elle nécessite de l' énergie et cela pose la problématique de la gestion d'énergie des environnements embarqués ou contraints.

L'élément objet de la présente invention se situe dans cette dernière catégorie. Son but est d'apporter par sa conception une sécurité maximale contre les attaques extérieures tout en minimisant par son architecture la consommation d'énergie apportant ainsi une solution à la gestion d'énergie des environnements embarqués ou contraints.

Avant d'exposer les différentes parties constituant l'élément selon l'invention, nous allons donner quelques définitions de base. Une machine virtuelle est une construction programmée d'un microprocesseur. Elle possède donc un jeu d'instructions exécutables et une architecture de calcul (registres, unité arithmétique et logique, accès aux mémoires, logique câblée d'exécution de microcodes). Un système d'exploitation (OS) est un programme dont les principales fonctions sont la gestion des événements provenant de l'extérieur (interruption), la gestion de mémoires interne et externe, la gestion de périphériques internes et/ou externes, la factorisation et la mise en commun de données et de codes exécutables. Un composant possible d'une telle machine est un dictionnaire dans lequel sont présentés sous la forme de mots (ou objets) les programmes et les données. Chaque mot peut être trouvé de manière unique par ses références ou son adresse mémoire. Si l'élément contient du code exécutable de la machine virtuelle, le mot est dit exécutable. L'interpréteur est un programme qui transpose le code exécutable de la machine virtuelle en opération sur la machine réelle (microprocesseur). En effet, les programmes sont représentés sous la forme d'une suite de mots exécutables primitifs (séquences indivisibles) ou non, dit code exécutable pour une machine virtuelle. L'interpréteur propose aussi l'ensemble des primitives atomiques du langage ainsi que l'ensemble des mécanismes de sécurisation des informations. Habituellement, le code exécutable est présent en mémoire non volatile en lecture seule (par exemple ROM), il est possible de le placer en mémoire non volatile et en lecture et écriture (par exemple EEPROM) ou en mémoire volatile en lecture écriture (par exemple RAM), dans ce cas on utilise un programme de chargement appelé chargeur. Le système d'exploitation peut communiquer avec l'extérieur en proposant des services génériques spécialisés dans l'échange d'information et dans le domaine des cartes à puces, par exemple on peut se référer aux normes ISO/IEC 7816 et ISO/IEC 14443.

L'élément électronique selon l'invention est caractérisé par la clause caractérisante de la revendication 1.

Ainsi, l'élément électronique selon l'invention comprend une machine virtuelle reposant sur un dictionnaire particulier et un interpréteur adapté. En plus, le système d'exploitation s'exécute sur la machine virtuelle en offrant des services communs aux applications présentes dans la machine, c'est-à-dire que le rapport habituel machine virtuelle/système d'exploitation est supprimé puisqu'il est réduit à la mise en commun de données et de codes exécutables. C'est l'architecture même de la machine virtuelle qui permet de s'affranchir complètement d'un système d'exploitation traditionnel. Réalisée sur mesure, cette machine virtuelle autorise des opérations optimisées pour les environnements très contraints en mémoire et en puissance de calcul, comme une carte à puce ou un élément communiquant. L'absence d'un système d'exploitation usuel permet de simplifier l'élément électronique et donc économiser l'énergie donnant ainsi une solution au problème de gestion d'énergie de cet environnement très contraint sans rien enlever à ses performances et fonctionnalités.

L'avantage du dictionnaire, qui est l'un des éléments principaux de cette machine virtuelle, est que l'organisation des informations et la méthode de recherche de ces informations permettent la hiérarchisation des objets de la bibliothèque et des différentes applications, autorisant ainsi le changement de code d'une application tout en rendant impossible des techniques du type "Cheval de Troie". En plus, le dictionnaire permet également la mobilité du code sans compromis sur sa vitesse d'exécution, c'est-à-dire qu'extérieurement un objet est repéré par des références uniques, mais dans la machine virtuelle, ce même objet est repéré par son adresse mémoire.

Selon une variante d'exécution, l'élément électronique comprend deux brouillons utilisés lors de l'écriture des informations, le premier brouillon étant conçu pour sécuriser l'écriture d'une information élémentaire, tandis que le second brouillon est conçu pour sécuriser une transaction complète telle que déplacement mémoire, changement de base, effacement, compactage. La mémoire du dictionnaire d'application comprenant la mémoire EEPROM, FLASH ou similaire est gérée par des mécanismes permettant de manipuler les données même en cas de rupture d'énergie pendant les mises à jour et ceci grâce aux deux brouillons. En effet, le mécanisme d'écriture sécurise l'écriture d'une information élémentaire dans le premier brouillon, tandis que le second sécurise une transaction complète (déplacement, c'est-à-dire il permet le déplacement d'objets dans la mémoire, le changement de base d'objets, l'effacement d'objets et le compactage du dictionnaire). La suppression d'une application ou d'un objet dans le dictionnaire fragmente la mémoire. Le système de double brouillons permet donc de défragmenter cette mémoire en utilisant une suite de transactions du type changement de base et déplacement en mémoire. C'est à dire que l'on peut supprimer, par exemple les données de programme d'une application préalablement installée, et de réorganiser donc compacter cette mémoire pour optimiser l'espace occupé. Le mécanisme utilisé pour la gestion du dictionnaire d'application permet de réaliser des transactions sécurisées même en cas de rupture d'énergie.

Selon une autre variante d'exécution, la machine virtuelle est munie d'une machine à état fini désignée chargeur/vérifieur conçue pour transformer le code extérieur chargé en code exécutable par la machine virtuelle. Il effectue des transformations et vérifications rendant inutile le contrôle lors de l'exécution. En effet, le chargeur/vérifieur ne transforme pas seulement le code extérieur en code exécutable par la machine mais il met en oeuvre différentes vérifications permettant d'éviter lors de l'exécution d'effectuer de telles vérifications. Contrairement au langage du type Forth ce chargeur/vérifieur vérifie la destination des déroutements d'exécution, vérifie l'utilisation des piles de données et s'assure qu'aucun déroulement dans le code exécutable ne puisse franchir le contexte d'une application, c'est-à-dire passer d'une application à une autre. Le code exécutable extérieur n'est pas basé car l'utilisation d'un mot du dictionnaire se fait par sa référence. Lors du chargement, l'algorithme de recherche remplace cette référence par l'adresse réelle du mot en mémoire. On vérifie ainsi qu'un mot d'application défini dans le dictionnaire ne peut être redéfini dans le même contexte. Le chargeur/vérifieur permet d'installer des codes exécutables ou des données en provenance extérieure sans mettre en cause la sécurité des informations présentes en mémoire.

Selon une autre variante d'exécution, la machine virtuelle est conçue pour assurer la sécurité d'un mot du dictionnaire par réification réflexive en déléguant les opérations d'un niveau N à des opérations décrites au niveau N+1 en utilisant le même langage L du niveau N pour décrire les opérations au niveau N+1, lesdites opérations étant réifiées sur un mot exécuté dans un contexte approprié dans le même code exécutable de la machine virtuelle laquelle a basculé dans un contexte système, un opérateur de dénotation permettant alors d'accéder au mot à sécuriser.

Concernant cette réflexivité, la symétrie données/programmes et la manipulation de la sécurité des mots par d'autres mots renforcent considérablement le niveau de sécurité comparé aux modèles plus classiques. En outre, la réflexivité apporte des avantages certains pour la portabilité du code source, la représentation compacte des informations et la manipulation exclusive de ces informations.

Selon une autre variante d'exécution, la machine virtuelle implémente une machine à état fini conçue pour transformer le couple [classe, instruction] d'une commande extérieure normalisée type ISO/IEC 7816 ou ISO/IEC 14443 à la valeur unique référence permettant d'identifier le mot exécutable correspondant dans le dictionnaire.

Cette fonction optimise le temps de décodage et de recherche du code à exécuter en réaction à une commande en provenance de l'extérieur.

Enfin la machine virtuelle et l'abstraction logicielle du matériel peuvent être substituées par une machine matérielle microprogrammée reproduisant les mêmes caractéristiques et fonctionnalités ce qui permet de gagner en vitesse d'exécution.

l'invention sera décrite plus en détails à l'aide du dessin annexé.
La figure 1 est une représentation schématique des composants essentiels d'un élément électronique similaire à celui de la présente invention.
La Figure 2 est une représentation schématique de l'élément microprocesseur avec son logiciel.
La Figure 3 est une représentation schématique du dictionnaire selon l'invention.
La Figure 4 est une représentation schématique des mots exécutables ou données en mémoire.
La Figure 5 est une représentation schématique d'un mot avant et après chargement dans l'élément électronique.
La Figure 6 est une représentation schématique de manipulation des mots dans le dictionnaire.
La Figure 7 est une représentation schématique de la sécurisation d'un mot.
La Figure 8 est une représentation schématique du fonctionnement de la machine à état fini de communication.
Les Figures 9, 9a et 9b représentent schématiquement la recherche d'un mot dans un contexte système respectivement application.
La Figure 10 est une représentation de l'algorithme de démarrage du système.
La Figure 11 est une représentation schématique de la structure des deux brouillons de l'élément électronique.
La Figure 12 est une représentation schématique de l'interpréteur de la machine virtuelle.

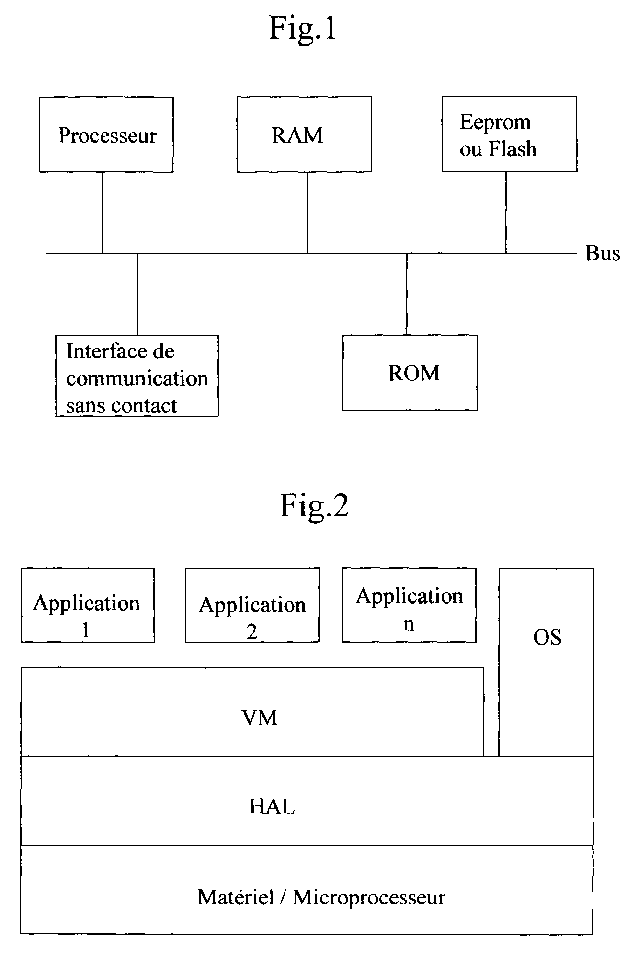

A la figure 1 les composants essentiels d'un élément électronique similaire à la présente invention sont: un bus reliant un processeur, une interface de communication avec ou sans contact, une mémoire du type RAM, une mémoire du type EEPROM ou FLASH, et une mémoire du type ROM ou FLASH constituant respectivement les dictionnaires transcient, application, et application et système.

A la figure 2 nous avons le microprocesseur sur lequel est bâtie l'abstraction logicielle du matériel HAL, la machine virtuelle VM bâtie sur la HAL, le système d'exploitation OS dont la fonction unique est la mise en commun du code exécutable et les applications 1 à n.

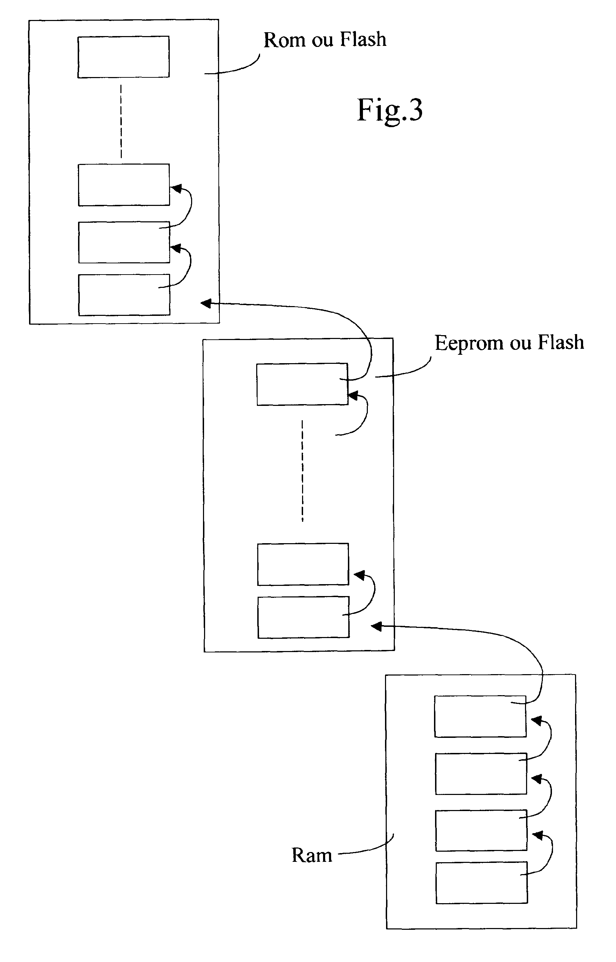

A la figure 3 nous avons les trois parties du dictionnaire contenant les mots chaînés à savoir une première contenant le système et les applications de base fait de mémoire ROM ou FLASH avec la restriction de pouvoir écrire une seule fois, le dictionnaire des applications chargées et vérifiées fait d'une mémoire du type EEPROM ou FLASH et enfin le dictionnaire transcient avec les données temporaires fait d'une mémoire du type RAM.

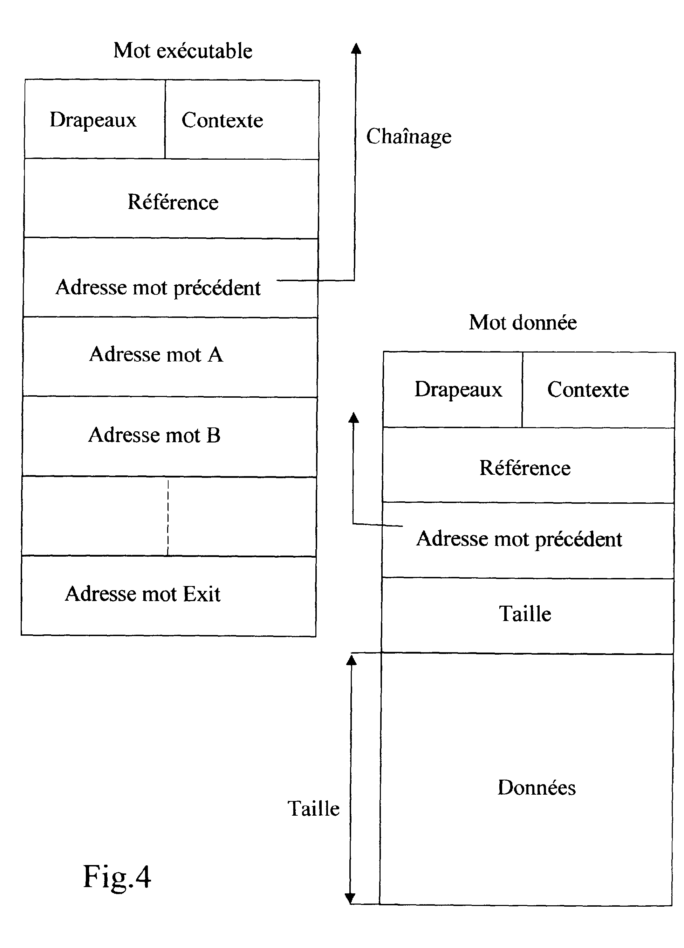

A la figure 4 on a la représentation en mémoire interne d'un mot exécutable et d'un mot de données.

Le mot exécutable contient en premier lieu des drapeaux indiquant son état, un indicateur du contexte, suivi de sa référence, suivi du chaînage au mot précédent dans le dictionnaire (adresse du mot précédent), suivi des mots A, B .... jusqu'au mot EXIT. Le mot donnée contient en premier lieu des drapeaux indiquant son état, un indicateur du contexte, suivi de sa référence, suivi du chaînage au mot précédent dans le dictionnaire (adresse du mot précédent), suivi de l'indication de sa taille et des données.

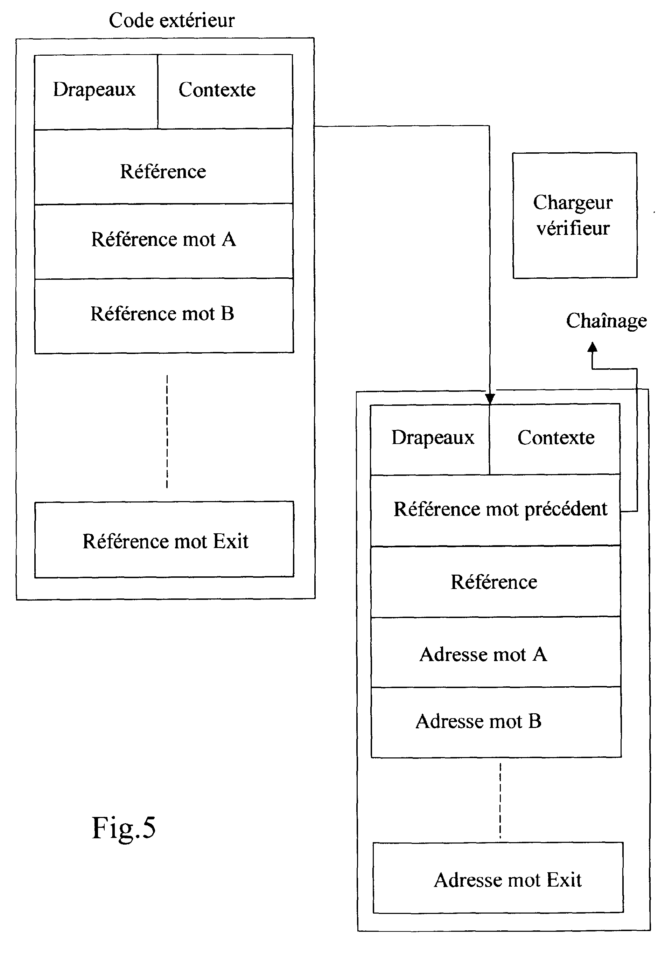

A la figure 5 nous avons représenté le chargement par le chargeur/vérifieur d'un mot exécutable. On a représenté le mot avant et après chargement.

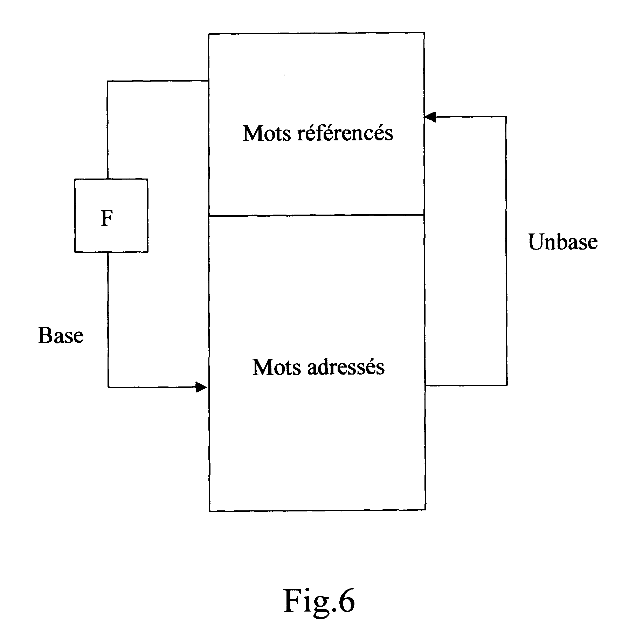

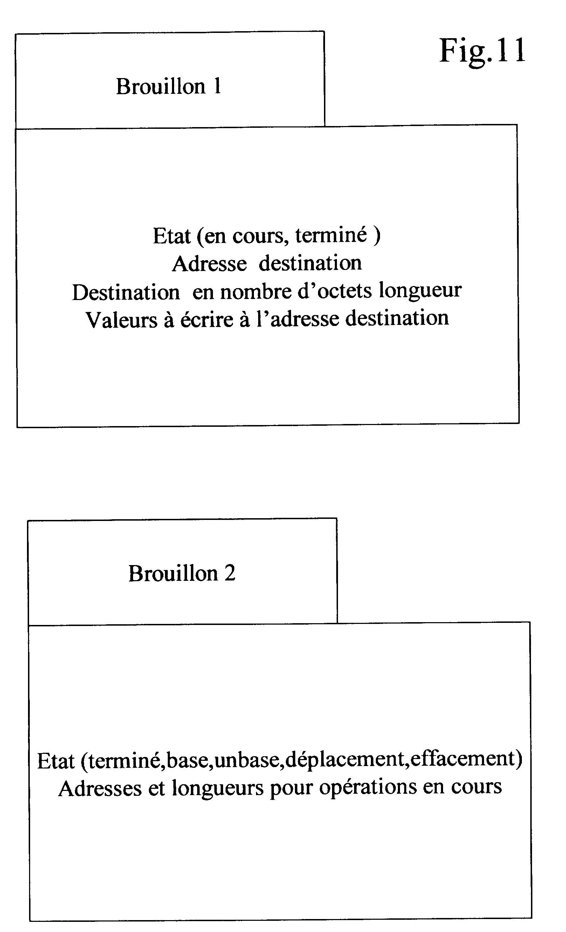

Le mot exécutable contient en premier lieu des drapeaux indiquant son état, un indicateur du contexte, suivi de sa référence, suivi des références de mots A, B, ..... EXIT. Le chargeur/vérifieur à l'aide du brouillon 2 (voir Fig 6 et 11) utilise l'opération base pour remplacer les références des mots A, B,.... EXIT, par leurs adresses.

A la figure 6 on a décrit les opérations de "base" et "unbase" et leur utilisation pour réorganiser le dictionnaire. L'opération unbase remplace dans le dictionnaire l'adresse d'un mot (mot adressé) par sa référence (mot référencé). L'adresse est une valeur paire tandis que la référence est une valeur impaire. Lorsque l'on désire réorganiser un dictionnaire c'est à dire déplacer des mots, compacter pour occuper la place laissée par une application ou mot antérieur on utilise l'opération de unbase pour associer aux mots leurs références, les positionner à leurs nouvelles places par l'opération F et avec l'opération base on leur associe leurs nouvelles adresses. Les deux opérations résistent à une coupure d'alimentation. C'est à dire que l'opérations peuvent continuer après restauration de l'alimentation là ou elles s'étaient arrêtées.

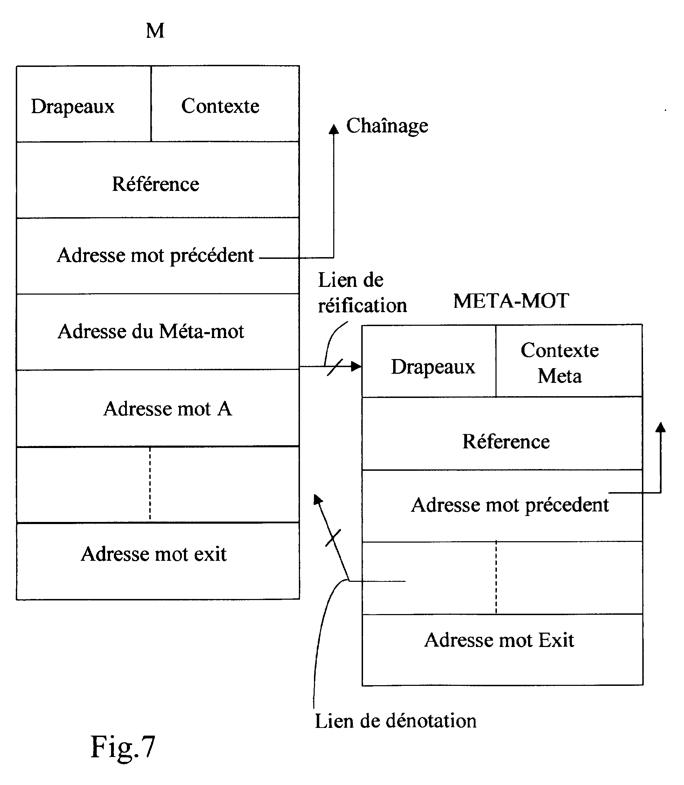

A la figure 7 on a représenté les liens de réifications/dénotations pour l'exécution d'un mot. Le mot M à sécuriser contient en premier lieu des drapeaux indiquant son état, un indicateur du contexte, suivi de sa référence, suivi du chaînage au mot précédent dans le dictionnaire (adresse du mot précédent), l'adresse du meta-mot, suivi des adresses des mots A,B,.... EXIT. Le meta-mot sécurisant l'exécution du mot M contient en premier lieu des drapeaux indiquant son état, un indicateur du contexte meta , suivi de sa référence, suivi du chaînage au mot précédent dans le dictionnaire (adresse du mot précédent),suivi des adresses des mots A, B, ....., EXIT dont une adresse indique que son origine est le mot à sécuriser.

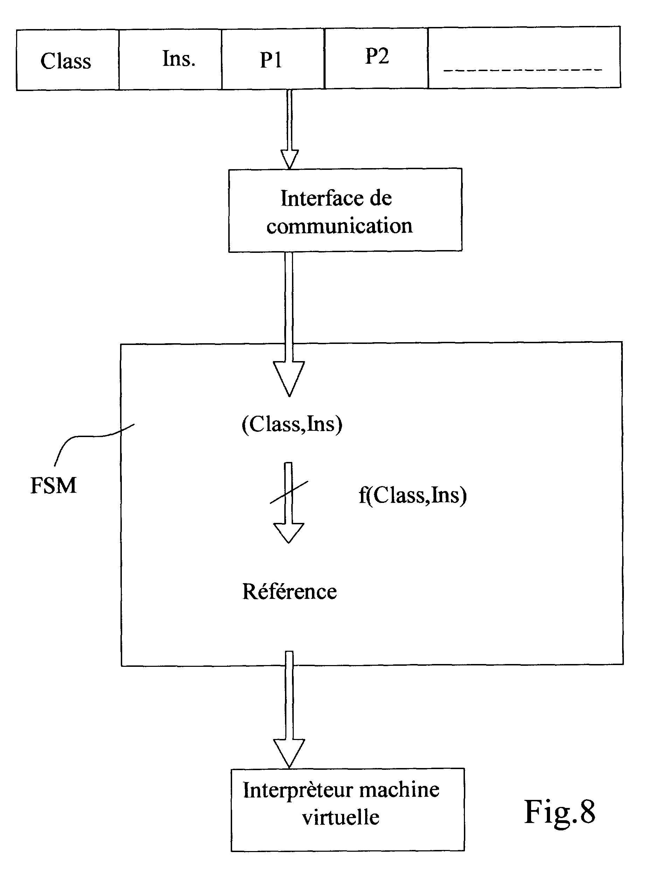

A la figure 8 une machine à état fini FSM permet lors d'une communication initiée habituellement par le lecteur selon la norme ISO 7816 ou ISO 14443 et comprenant la trame [CLASS, INS, P1, P2, P3, Data] de la transformer en référence d'un mot à exécuter. CLASS est la classe de commande, INS est l'instruction de la commande , P1 est un premier paramètre, P2 est un deuxième paramètre, P3 est un troisième paramètre indiquant la longueur des données, chacun de ces éléments est constitué d'un seul octet. DATA est une information facultative d'une longueur P3. FSM permet d'avancer dans le traitement de la trame susmentionnée. La détection d'une erreur n'arrête pas la FSM. Les informations CLASS, INS, P1, P2, P3 sont directement rangées dans des registres accessibles ensuite par le système d'exploitation et la machine virtuelle. Ces registres peuvent être des registres matériels du microprocesseur. Les données sont directement rangées dans une mémoire de gestion MMU (Memory Management Unit), invalidant ainsi les attaques en débordement de tampon.

Si l'ensemble du traitement est correct, la FSM effectue le traitement final suivant :
1. fabrication d'une référence unique par la fonction f(CLASS, INS) qui est une suite d'opérations logiques.
2. recherche du mot exécutable dans la machine virtuelle correspondant à cette référence.
3. si le mot est trouvé :le mot est exécutée dans la machine virtuelle. Le mot exécuté peut accéder au tampon de sortie en validant la zone mémoire avec la MMU. Une relance temporelle avec un mot exécutable particulier est possible. On émet le tampon de sortie suivi de SW1 SW2 ( code d'erreur ISO 7816 etc).
4. si le mot n'est pas trouvé on émet la faute SW1 SW2 "Pas Trouvé"
5. on réinitialise la FSM pour la trame suivante.

Si une erreur a été détectée durant le traitement de réception, la FSM se réinitialise en fin de traitement après avoir envoyé la faute (SW1 SW2).

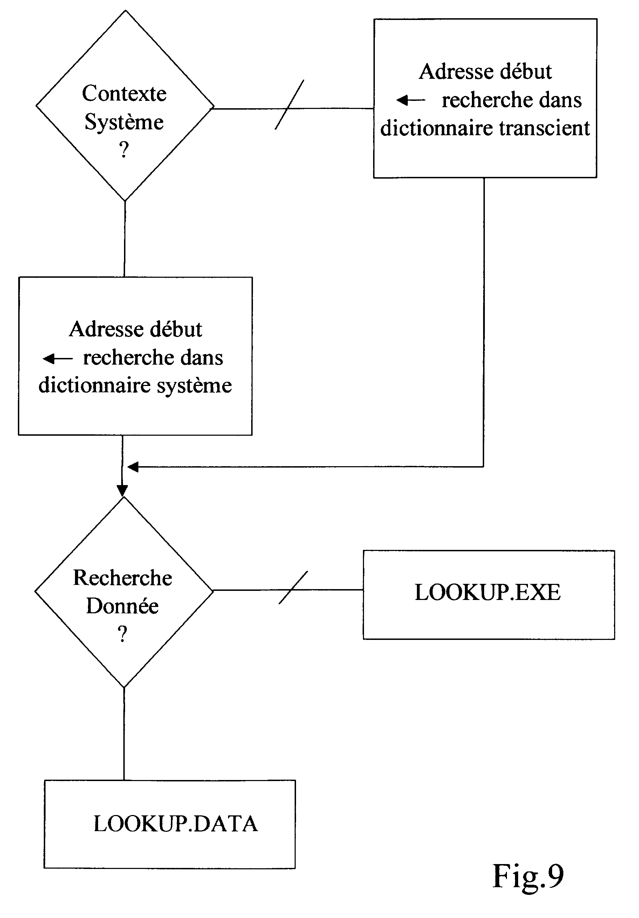

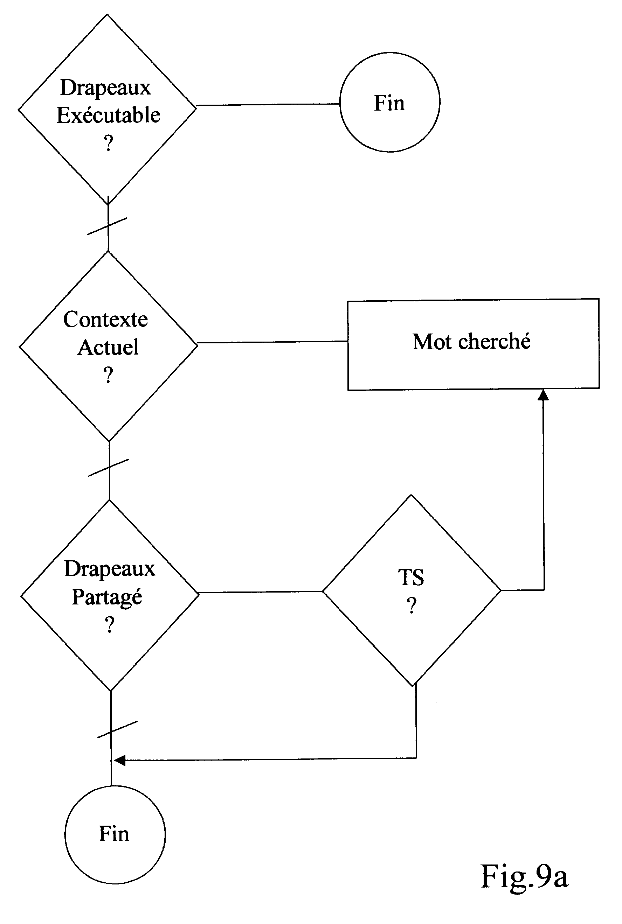

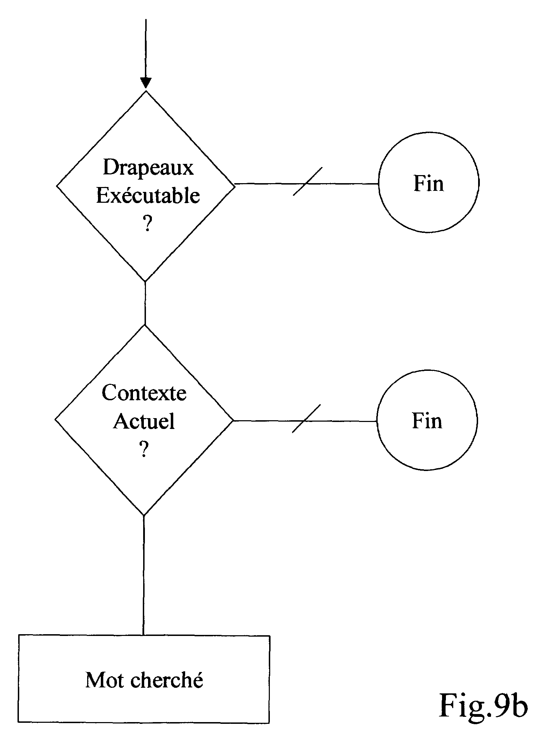

A la figure 9 on a représenté l'algorithme de recherche d'un mot dans le dictionnaire connaissant sa référence. Si le mot est dans contexte système la recherche commence par le dernier mot du dictionnaire système jusqu'à trouver le mot cherché. Si l'on se trouve dans un contexte application la recherche commence par le dernier mot du dictionnaire transcient jusqu'à trouver le mot cherché. En fonction du contexte on choisi dans la table de correspondance LOOKUP.exe ou LOOKUP.data

A la figure 9a on a représenté l'algorithme de recherche d'un mot de données dans le dictionnaire qui est parcouru en suivant les liens "adresse mot précédent".

Si les drapeaux indiquent qu'il s'agit d'un mot exécutable l'opération s'arrête avec l'indication "Pas Trouvé. Si les drapeaux indiquent que le mot est du type data on contrôle si l'on se trouve dans le contexte actuel. dans l'affirmative le cherché est trouvé. dans la négative on contrôle si les drapeaux indiquent que le mot est partagé. Dans l'affirmative on passe au traitement suivant (TS) c'est dire on continue à chercher dans le dictionnaire, en vérifiant qu'il n'existe pas un autre mot "partageable" ou "partagé" de même référence. Si le mot existe, le mot trouvé ne peut pas être utilisé.

A la figure 9b on a représenté l'algorithme de recherche d'un mot exécutable dans le dictionnaire en suivant les liens "adresse mot précédent". La représentation est suffisante et ne demande pas de commentaire supplémentaire.

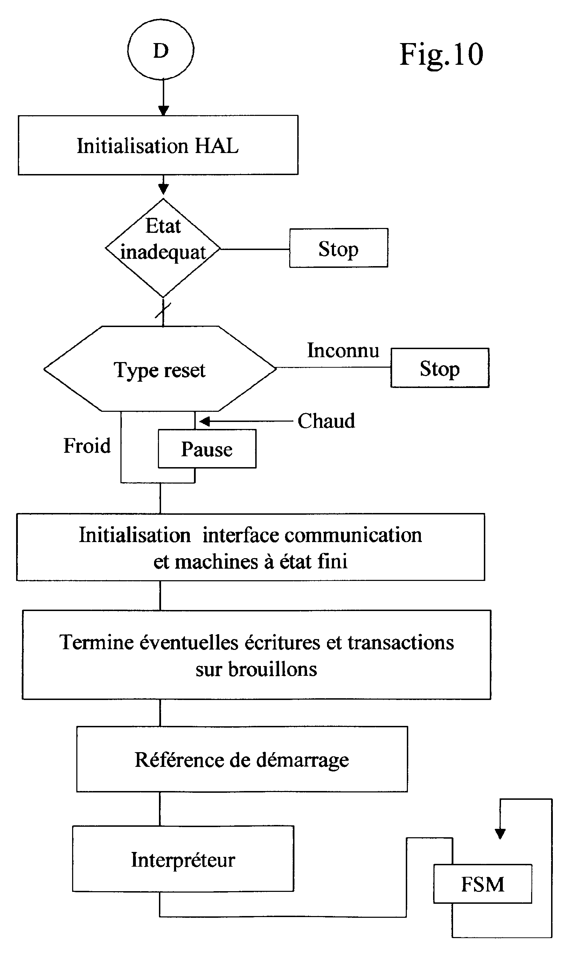

A la figure 10 on représenté l'algorithme séquence de démarrage du système. Après l'initialisation de la HAL et des différents éléments internes ( interface, les FSM, reset...), nous terminons les éventuelles opérations en cours sur les brouillons et ensuite nous démarrons l'interpréteur et la FSM de communication qui boucle sur elle même tant qu'elle ne reçoit pas une communication. Après l'initialisation de la HAL on contrôle si la puce est dans un état inadéquat et dans la négative on contrôle l'état du reset. Si il s'agit d'un reset à chaud une pause est prévue pour rendre difficiles les éventuelles attaques extérieures. La référence de démarrage est un mot exécutable prédéterminé permettant par exemple d'identifier l'élément électronique.

A la figure 11 nous avons représenté les deux brouillons. Le brouillon 1 stocke l'adresse et la valeur à y placer d'une opération élémentaire d'écriture de taille donnée. Tant que cette opération n'est pas terminée, la séquence de démarrage (Fig 10) la retente. Le brouillon 2 stocke les paramètres (adresses et longueurs en octets) d'opérations transactionnelles (déplacement en mémoire, base, unbase, effacement mot, effacement application). Ce brouillon 2 utilise le premier pour les opérations élémentaires. Tant que la transaction n'est pas terminée, la séquence de démarrage (Fig 10) la retente. Les opérations d'écriture dans le brouillon 2 utilisent systématiquement le brouillon 1.

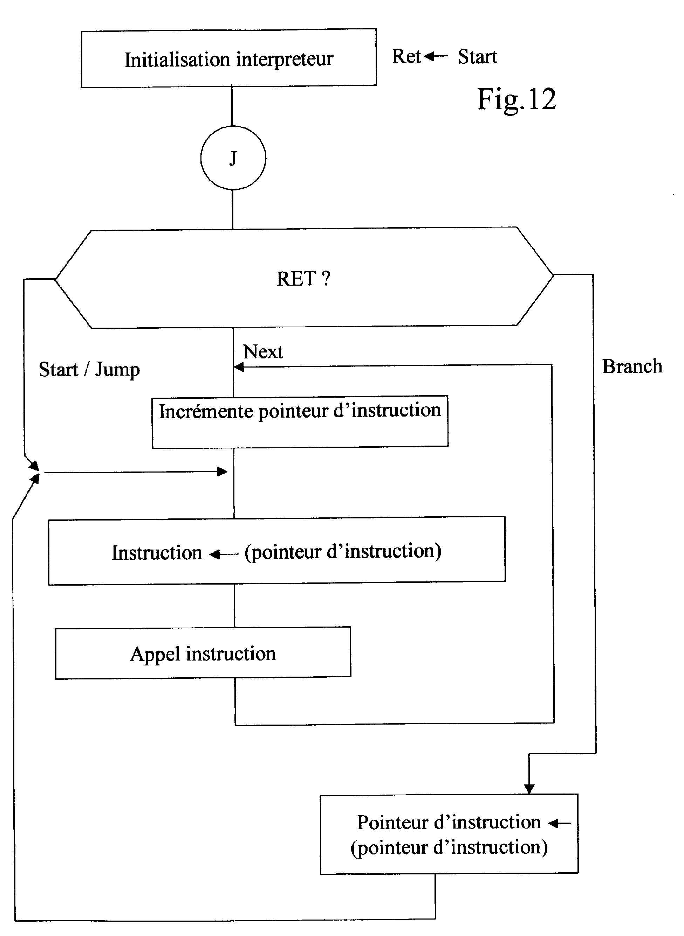

A la figure 12 on a représenté l'algorithme simplifié de la machine virtuelle. Après initialisation de ses variables de fonctionnement (piles de données, pointeur d'instruction), la valeur numérique RET étant fixée à START, l'interpréteur enchaîne sa séquence normale de fonctionnement: lecture de l'instruction à l'adresse pointée par le pointeur d'instruction, puis appel de l'instruction pour exécution, puis incrémentation du pointeur d'instruction pour pointer sur l'instruction suivante. Le point de saut exceptionnel J peut être appelé par certaines instructions particulières de la machine virtuelle. La valeur numérique RET ayant été positionnée à JUMP, NEXT ou BRANCH suivant le traitement exceptionnel à effectuer (saut direct à une nouvelle instruction, incrémentation du pointeur d'instruction ou branchement indirect à une nouvelle instruction). Ensuite la machine virtuelle reprend sa séquence normale de fonctionnement.
Nous avons résumé sur le tableau qui suit les avantages de l'élément selon la présente invention et les composants qui y contribuent.

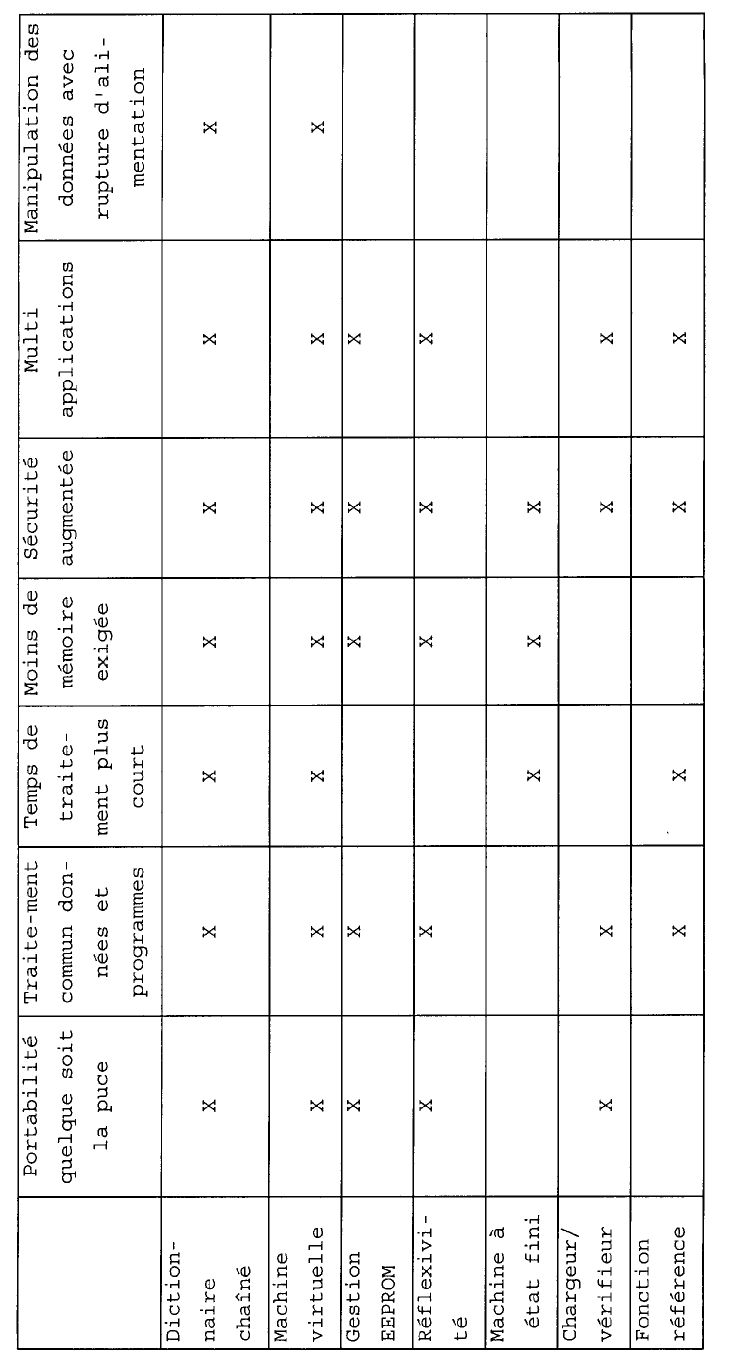

## Revendications

1. Elément électronique comprenant au moins un jeu de mémoires volatiles et non volatiles, une interface de communication sans contact et un système d'exploitation (OS), **caractérisé par le fait qu'**il comprend une machine virtuelle bâtie sur une abstraction logicielle du matériel (HARDWARE ABSTRACT LAYER) intégrant les mécanismes de base des environnements embarqués ou contraints et basée sur un interpréteur de code exécutable et d'un ensemble de primitives du langage offrant les opérations de base, que le système d'exploitation a comme fonction unique la mise en commun du code exécutable pouvant communiquer avec l'extérieur, et qu'il comprend un dictionnaire contenant les programmes et les données sous forme d'objets ou mots chaînés entre-eux, ledit dictionnaire étant séparé en trois parties, une première constituée d'une mémoire non volatile et permettant la lecture seule constituant le dictionnaire système et éventuellement application, une deuxième partie constituée d'une mémoire non volatile permettant lecture et écriture constituant le dictionnaire application, et une troisième partie constituée d'une mémoire volatile permettant lecture et écriture constituant le dictionnaire transcient, que les trois parties du dictionnaire sont chaînées et constituent un seul dictionnaire vis à vis de l'algorithme de recherche, et que chaque mot du dictionnaire est identifié de façon unique par un couple de valeur [référence, contexte], référence étant un code unique impair représenté par au moins 16 bits et contexte une valeur numérique associée à une application.

2. Elément selon la revendications 1, **caractérisé par le fait qu'**il comprend deux brouillons utilisés lors de l'écriture, le premier brouillon étant conçu pour sécuriser l'écriture d'une information élémentaire tandis que le second est conçu pour sécuriser une transaction complète telle que déplacement mémoire, changement de base, effacement, compactage.

3. Elément selon l'une des revendications 1 ou 2, **caractérisé par le fait que** la machine virtuelle est munie d'une machine à état fini désignée chargeur/vérifieur conçue pour transformer le code exécutable chargé par le système d'exploitation en code exécutable par la machine virtuelle permettant d'effectuer des transformations et vérifications rendant inutile le contrôle lors de l'exécution et d'éviter que le code exécutable puisse franchir le contexte d'une application, un mot exécutable extérieur est utilisé par sa référence et lors du chargement elle est remplacée par l'adresse réelle en mémoire.

4. Elément selon l'une des revendications 1 à 3 **caractérisé par le fait que** la machine virtuelle est conçue pour assurer la sécurité d'un mot du dictionnaire par réification réflexive en déléguant les opérations d'un niveau N à des opérations décrites en un niveau N+1 en utilisant le même langage L du niveau N pour décrire les opérations au niveau N+1, lesdites opérations étant réifiées sur un mot de commande exécutée dans un contexte approprié dans le même code exécutable de la machine virtuelle lequel a basculé dans un contexte système (META CONTEXTE), un opérateur de dénotation permettant alors d'accéder au mot à sécuriser.

5. Elément selon l'une des revendications 1 à 4, **caractérisé par le fait que** la machine virtuelle implémente lors d'une communication avec l'extérieur une machine à état fini (FSM) conçue sans mécanisme d'interruption du calcul en cours par un évènement extérieur, sans mémoire tampon, une répartition du temps de décodage des informations, et une transformation directe de la demande extérieure en référence d'un mot exécutable dans le dictionnaire.

6. Elément selon la revendication 5, **caractérisé par le fait que** la machine à état fini est conçue pour transformer le couple [classe, instruction] d'une commande extérieure à la valeur unique référence permettant d'identifier le mot exécutable correspondant dans le dictionnaire.

7. Elément selon l'une des revendications 1 à 6 , **caractérisé par le fait que** ledit dictionnaire est conçu pour être parcouru dans un contexte application à partir du dernier mot situé dans le dictionnaire transcient et dans un contexte système à partir du dernier mot du dictionnaire système jusqu'à ce que l'on trouve le mot cherché.

8. Elément selon l'une des revendications 1 à 7, **caractérisée par le fait que** la machine virtuelle et l'abstraction logiciel du matériel sont substituées par une machine matérielle microprogrammée reproduisant les mêmes caractéristiques et fonctionnalités.
